# EUROPEAN PATENT APPLICATION

(11) **EP 2 811 612 A1**
(43) Date of publication of application: **10.12.2014**
(21) Application number: 14170482.5
(22) Date of filing: 29.05.2014
(51) Int. Cl.: H02J 7/00, H04M 1/00

(54) **Mobile power bank device**

(30) Priority: 05.06.2013 TW 102119961
(71) Applicant: Codetek Technology Co., Ltd., Hsinchu City 300 (TW)
(72) Inventor: Su, Chien-Hua, 300 Hsinchu City (TW)
(74) Representative: Petraz, Gilberto Luigi

(57) **Abstract**

A mobile power bank assembly device includes a first unit and a second unit. The first unit includes a first casing, a first battery, a first functional circuit, and a first connector. The first battery is connected to the first functional circuit. The first battery and the first functional circuit are disposed inside the first casing. The first connector is exposed from the first casing and connected to the first functional circuit. The second unit includes a second casing, a second functional circuit and a second connector. The second connector is exposed from the second casing and connected to the second functional circuit. The first and second units can be plugged and connected with each other through a connection of the first and second connectors, thereby configuring the second functional circuit to receive electric power from the first battery and have a signal connection with the first functional circuit.

## Description

### FIELD OF THE INVENTION

The present invention relates to a mobile power bank assembly device, and more particularly to a mobile power bank assembly device with multifunction.

### BACKGROUND OF THE INVENTION

With more and more mobile devices have been introduced and commonly used, demands on power banks are increased. However, the conventional mobile power bank is an electronic device equipped with an internal battery and has only one function, that is, charging. Unlike a smart phone with multifunction, a conventional mobile power bank usually with a certain volume and weight and with only single/simple function can cause decrease in willingness of carrying. Therefore, how to solve the issue and increase convenience of use and willingness of carrying is the subject of the present invention.

### SUMMARY OF THE INVENTION

Therefore, one aspect of the present invention is to provide a mobile power bank assembly device, which includes a first unit and a second unit. The first unit includes a first casing, a first battery, a first functional circuit, and a first connector. The first battery is electrically connected to the first functional circuit. The first battery and the first functional circuit are disposed inside the first casing. The first connector is exposed from the first casing and electrically connected to the first functional circuit. The second unit includes a second casing, a second functional circuit, and a second connector. The second connector is exposed from the second casing and electrically connected to the second functional circuit. The first unit and the second unit can be plugged and electrically connected with each other through a connection of the first connector and the second connector, thereby configuring the second functional circuit to receive an electric power from the first battery and have a signal connection with the first functional circuit.

In one embodiment of the present invention, the first functional circuit is an internet connection circuit, a media playing circuit, a data storage circuit, a digital-image capturing circuit, a laser pointer circuit or a stun gun circuit.

In one embodiment of the present invention, the second functional circuit is an internet connection circuit, a media playing circuit, a data storage circuit, a digital-image capturing circuit, a laser pointer circuit or a stun gun circuit.

In one embodiment of the present invention, the first connector and the second connector are universal series bus (USB) connector units.

In one embodiment of the present invention, the first battery is recharged by an electrical power derived from an external power source through to the first connector.

In one embodiment of the present invention, the first functional circuit is powered by an electrical power derived from an external power source through to the first connector.

In one embodiment of the present invention, the second functional circuit is powered by an electrical power derived from an external power source through to the second connector.

In one embodiment of the present invention, the second unit further includes a second battery electrically connected to the second functional circuit. The second battery and the second functional circuit are disposed inside the second casing.

In one embodiment of the present invention, the second battery is recharged by an electrical power derived from an external power source through to the second connector.

### BRIEF DESCRIPTION OF THE DRAWINGS

The present disclosure will become more readily apparent to those ordinarily skilled in the art after reviewing the following detailed description and accompanying drawings, in which:
FIG. 1 is a functional block diagram of a mobile power bank assembly device in accordance with an embodiment of the present invention;
FIG. 2 schematically illustrates an exemplary appearance view of the first unit and the second unit shown in FIG. 1; and
FIG. 3 is a functional block diagram of a mobile power bank assembly device in accordance with another embodiment of the present invention.

### DETAILED DESCRIPTION OF PREFERRED EMBODIMENTS

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

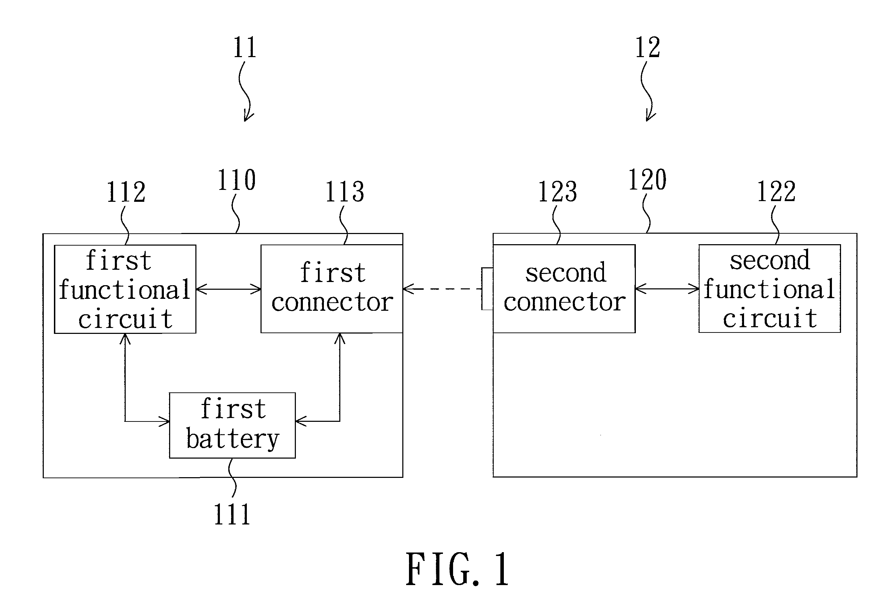

FIG. 1 is a functional block diagram of a mobile power bank assembly device in accordance with an embodiment of the present invention. As shown, the mobile power bank assembly device in the present embodiment is exemplified by including a first unit 11 and a second unit 12. The first unit 11 includes a first casing 110, a first battery 111, a first functional circuit 112 and a first connector 113. The first battery 111 is electrically connected to the first functional circuit 112; and both of the first battery 111 and the first functional circuit 112 are disposed inside the first casing 110. The first connector 113 is exposed from the first casing 110 and is electrically connected to the first functional circuit 112 and the first battery 111. In one embodiment, the first functional circuit 112 may be a network connection circuit, which can be connected to Internet by way of WiFi, Ethernet, Wimax, 3G mobile communication or Long-Term Evolution (LTE). In another embodiment, the first functional circuit 112 may be further functioned as a wireless router configured to provide network accesses for other devices with network connection functions. In one embodiment, the first connector 113 may be a universal series bus (USB) connection unit, such as an USB connector. Because of being electrically connected to the first battery 111, both of the first functional circuit 112 and the first connector 113 can be powered by the first battery 111. In another embodiment, the first battery 111 may be further equipped with a charging circuit (not shown), thereby being capable of being recharged by an electrical power derived from an external power source through the first connector 113 (for example, an USB connector).

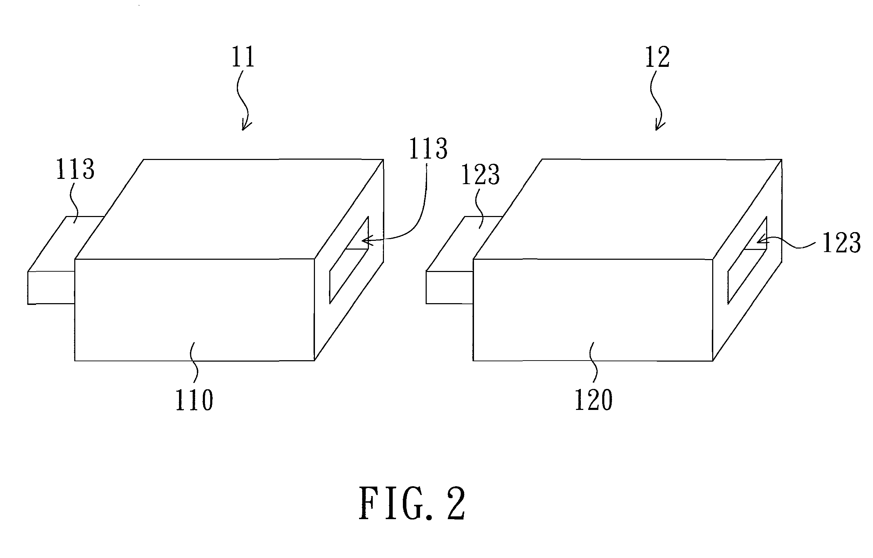

As show in FIG. 1, the second unit 12 includes a second casing 120, a second functional circuit 122 and a second connector 123. The second connector 123 is exposed from the second casing 120 and is electrically connected to the second functional circuit 122. In one embodiment, the second functional circuit 122 may be a media playing circuit, such as a MPEG-1 or MPEG-2 Audio Layer (MP3) player or an audio/video player; wherein it is understood that the second functional circuit 122 is further equipped with a display panel if the second functional circuit 122 functions as a video player. In one embodiment, the second connector 123 may be an USB connection unit, such as an USB connector. It is noted that in the case of both of the first connector 113 and the second connector 123 are USB connectors; the first unit 11 and the second unit 12 can be plugged and electrically connected to each other through the first connector 113 and the second connector 123. In addition, it is noted that by designing the first casing 110 and the second casing 120 with stackable, extendable and firmly connectable manners, the first unit 11 and the second unit 12 (or, even three or more units) can be connected in series. FIG. 2 schematically illustrates an exemplary appearance view of the first unit 11 and the second unit 12. As shown, the first unit 11 and the second unit 12 can be firmly connected with each other and each is further capable of being connected to another unit. In addition, as shown in FIG. 2, the first connector 113 can function as an USB host (or USB slave) and the second connector 123 can function as an USB slave (or USB host) while being connected with each other.

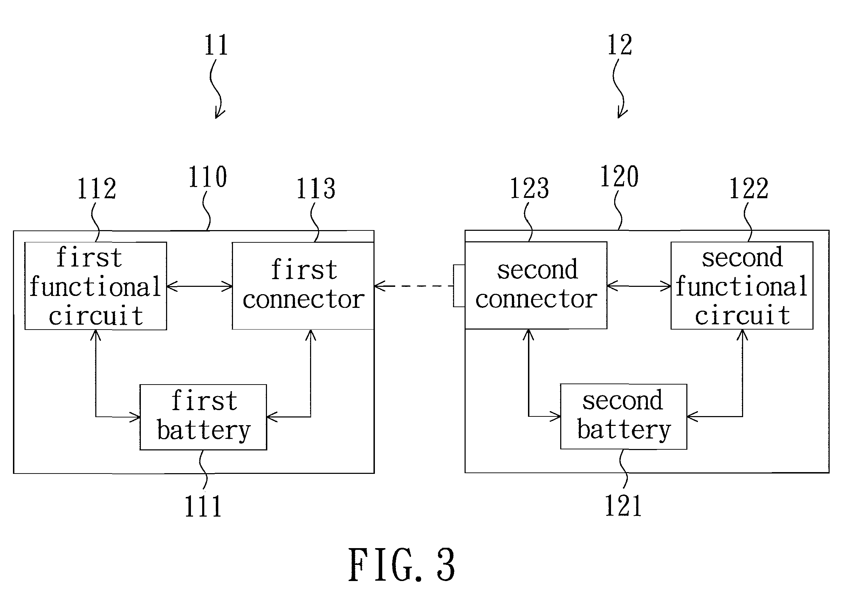

By electrically connecting the first unit 11 and the second unit 12 with each other through the first connector 113 and the second connector 123, not only the second functional circuit 122 in the second unit 12 can receive electrical power from the first battery 111 in the first unit 11, but also the first unit 11 and the second unit 12 can corporately perform specific functions. For example, in the case of the first functional circuit 112 is a network connection circuit and the second functional circuit 122 is a media playing circuit, not only the first battery 111 can provide electrical power to both of the first functional circuit 112 (a network connection circuit) and the second functional circuit 122 (a media playing circuit), but also the second functional circuit 122 (a media playing circuit) is able to connect to internet and downloads internet resources via the first functional circuit 112 (a network connection circuit). In another embodiment, the second unit 12 may further include a second battery 121, as illustrated in FIG. 3; and accordingly the second functional circuit 122 can be powered either by the second battery 121 or by the electrical power derived from an external power source (for example, an utility grid or power supply, not shown) through the second connector 123; and consequentially, the second unit 12 can function independently without being connected to the first unit 11.

In the aforementioned embodiment, the first functional circuit 112 is exemplified by a network connection circuit and the second functional circuit 122 is exemplified by a media playing circuit; however, the present invention is not limited thereto. In other words, the first functional circuit 112 and the second functional circuit 122 can be any other types of hardware with specific functions, such as a data storage circuit (a hard disk or a flash drive), a digital-image capturing circuit, a laser pointer circuit or a stun gun circuit. In addition, two or more units with respective functions can be selectively connected together in series based on an actual requirement. For example, in one embodiment, if a first unit with network-connection function, a second unit with media playing function and a third unit with data-storage function are connected together, a portable electronic device having specific functions, such as internet connecting, digital-file storing and media playing functions, is realized. In another embodiment, if a first unit with data-storage function and a second unit with digital-image capturing function are connected, a portable electronic device having specific functions, such as digital photo taking, video or event recording, is realized. In still another embodiment, if a first unit with digital-image capturing function and a second unit with network-connection function are connected together, a portable electronic device having specific functions, such as image taking and recording or a web camera has, is realized.

In summary, by selectively connecting two or more units with different functions base on an actual requirement, the mobile power bank assembly device of the present invention has reduced size and weight, thereby providing user with higher convenience.

While the disclosure has been described in terms of what is presently considered to be the most practical and preferred embodiments, it is to be understood that the disclosure needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A mobile power bank assembly device, **characterized in that** the mobile power bank assembly device comprises:
a first unit (11), comprising:
a first casing (110);
a first battery (111);
a first functional circuit (112); and
a first connector (113), wherein the first battery (111) is electrically connected to the first functional circuit (112), the first battery (111) and the first functional circuit (112) are disposed inside the first casing (110), and the first connector (113) is exposed from the first casing (110) and electrically connected to the first functional circuit (112); and
a second unit (12), comprising:
a second casing (120);
a second functional circuit (122); and
a second connector (123), wherein the second connector (123) is exposed from the second casing (120) and electrically connected to the second functional circuit (122), the first unit (11) and the second unit (12) can be plugged and electrically connected with each other through a connection of the first connector (113) and the second connector (123), thereby configuring the second functional circuit (122) to receive an electric power from the first battery (111) and have a signal connection with the first functional circuit (112).

2. The mobile power bank assembly device according to claim 1, **characterized in that** the first functional circuit (112) is an internet connection circuit, a media playing circuit, a data storage circuit, a digital-image capturing circuit, a laser pointer circuit or a stun gun circuit.

3. The mobile power bank assembly device according to claim 2, **characterized in that** the second functional circuit (122) is an internet connection circuit, a media playing circuit, a data storage circuit, a digital-image capturing circuit, a laser pointer circuit or a stun gun circuit.

4. The mobile power bank assembly device according to claim 1, **characterized in that** the first connector (113) and the second connector (123) are universal series bus (USB) connector units.

5. The mobile power bank assembly device according to claim 1, **characterized in that** the first battery (111) is recharged by an electrical power derived from an external power source through to the first connector (113).

6. The mobile power bank assembly device according to claim 1, **characterized in that** the first functional circuit (112) is powered by an electrical power derived from an external power source through to the first connector (113).

7. The mobile power bank assembly device according to claim 1, **characterized in that** the second functional circuit (122) is powered by an electrical power derived from an external power source through to the second connector (123).

8. The mobile power bank assembly device according to claim 1, **characterized in that** the second unit (12) further comprises:
a second battery (121), electrically connected to the second functional circuit (122), wherein the second battery (121) and the second functional circuit (122) are disposed inside the second casing (120).

9. The mobile power bank assembly device according to claim 8, **characterized in that** the second battery (121) is recharged by an electrical power derived from an external power source through to the second connector (123).
